# EUROPÄISCHE PATENTSCHRIFT

(11) **EP 3 569 335 B1**
(45) Veröffentlichungstag und Bekanntmachung des Hinweises auf die Patenterteilung: **21.12.2022**
(21) Anmeldenummer: 19171795.8
(22) Anmeldetag: 30.04.2019
(51) Int. Cl.: B23B 13/12, B23Q 7/04, B65G 47/92, B66C 1/04, H01F 7/02

(54) **MAGNETHEBER FÜR EINE FRÄSMASCHINE**
MAGNETIC LIFTER FOR A MILLING MACHINE
DISPOSITIF DE LEVAGE MAGNÉTIQUE POUR UNE FRAISEUSE

(30) Priorität: 14.05.2018 DE 202018102669 U
(43) Veröffentlichungstag der Anmeldung: 20.11.2019
(73) Patentinhaber: Harald Böhl GmbH, 35119 Rosenthal (DE)
(72) Erfinder: BÖHL, Harald, 35285 Gemünden/W. (DE); KNOCHE, Fabian, 34516 Ederbringhausen (DE)
(74) Vertreter: Patentanwälte Olbricht Buchhold Keulertz

(56) Entgegenhaltungen:
- EP-A1- 2 161 097
- DE-A1-102010 040 642
- DE-U1- 20 108 552

## Beschreibung

Die Erfindung betrifft einen Magnetheber für eine Bearbeitungsmaschine gemäß dem Oberbegriff von Anspruch 1.

Mithilfe von Bearbeitungsmaschinen für Metall, wie beispielsweise CNC - Bearbeitungsmaschinen, erfolgt beispielsweise eine Bearbeitung von Stangenmaterial, bei der ein Werkstück zunächst bis auf einen schmalen Steg vom Stangenmaterial abgetrennt wird. Nach dem Trennen des Werkstücks vom übrigen Stangenmaterial wird es dann in der Regel zu einer weiteren Bearbeitungsposition verbracht.

Das Trennen und anschließende Transportieren des Werkstücks erfordert üblicherweise mehrere Arbeitsschritte.

Aus DE 201 08 552 U1 ist ein Magnetheber nach dem Oberbegriff des Anspruchs 1 bekannt.

Weitere Magnethalter sind aus DE 10 2010 040642 A1 und EP 2 161 097 A1 bekannt.

Es ist nun eine Aufgabe der Erfindung, einen Magnetheber bereitzustellen, mit dem ein Arbeitsprozess vereinfacht werden kann und der eine schnellere Bearbeitung ermöglicht.

Diese Aufgabe wird durch einen Magnetheber mit den Merkmalen des Anspruchs 1 gelöst. Vorteilhafte Ausgestaltungen finden sich in den Unteransprüchen.

Bei einem Magnetheber für eine Bearbeitungsmaschine mit einem zylindrischen Grundkörper, der eine obere Stirnseite mit einem Befestigungsstift für einen Bearbeitungskopf und eine untere Stirnseite mit einer Ausnehmung aufweist, wobei innerhalb des Grundkörpers ein Magnetelement axialbeweglich zwischen einer Hebeposition und einer Freigabeposition bewegbar ist, wobei das Magnetelement in der Freigabeposition axial weiter innen relativ zum Grundkörper positioniert ist als in der Halteposition, ist erfindungsgemäß vorgesehen, dass an der unteren Stirnseite des Grundkörpers eine Werkstückplatte angeordnet ist, die eine Öffnung für das Werkstückende aufweist, wobei das Werkstückende rotationsfest in der Öffnung aufnehmbar ist.

Die Öffnung ist dabei auf das aufzunehmende Werkstückende derart abgestimmt, dass das Werkstückende zwar relativ einfach ein Stück weit in die Öffnung eingeführt werden kann, aber dennoch formschlüssig gegen Rotation gesichert ist. Dies kann durch ein leichtes Übermaß bei der Öffnung erreicht werden

Eine Bewegungsrichtung des Magnetelements liegt dabei insbesondere senkrecht zu einem Boden der Ausnehmung auf einer Symmetrieachse des Grundkörpers und damit in Verlängerung mit dem Befestigungsstift. Der Befestigungsstift kann dabei am Bearbeitungskopf, beispielsweise einem Fräskopf, befestigt sein, der in der Regel rotierbar und dreidimensional bewegbar ist. Vorzugsweise kann zur Aufnahme eines Werkstückendes in der Hebeposition eine Endfläche des Magnetelements bündig mit einem Boden der Ausnehmung sein oder über dem Boden überstehen und in die Ausnehmung hineinragen. In der Freigabeposition kann das Magnetelement mit seiner Endfläche gegenüber dem Boden der Ausnehmung nach innen von der unteren Stirnseite weg in den Grundkörper hinein versetzt sein.

Im Grundkörper des Magnethebers ist also ein innerhalb des Grundkörpers axial bewegbares Magnetelement angeordnet, das in der Hebeposition sehr nahe an ein Werkstückende herangeführt werden kann, sodass hohe Magnetkräfte wirken. Zum Lösen wird der Magnet dagegen in den Grundkörper hinein bewegt und somit vom Werkstück entfernt, wodurch die Magnetwirkung stark nachlässt und sich das Werkstück wieder einfach lösen lässt oder aufgrund der wirkenden Gewichtskräfte von alleine löst. Dabei kann das Werkstück dem Magnetelement bei der Bewegung von der Hebeposition in die Freigabeposition nicht folgen, da das Magnetelement in den Grundkörper hinein bewegt wird. Insbesondere wird er dabei gegenüber einem Boden der Ausnehmung nach innen in den Grundkörper bewegt. Darüber hinaus ist der Magnet innerhalb der Ausnehmung gut geschützt vor äußeren Einflüssen, insbesondere einer Verunreinigung, untergebracht. Die Ausnehmung weist dabei eine größere Erstreckung auf als das Magnetelement.

Mit Hilfe des erfindungsgemäßen Magnethebers lässt sich das das aufgenommene Werkstück nicht nur an eine weitere Bearbeitungsposition bewegen, sondern kann, falls gewünscht, auch direkt weiterbearbeitet werden. Als weitere Bearbeitungsschritte kommen beispielsweise ein Planen einer abgetrennten Fläche, das Entgraten von Kanten, ein Bürsten, Polieren und Ähnliches in Frage. Der Magnetheber kann dabei nicht nur zum Aufnehmen und Trennen eines Werkstücks von einem stangenförmigen Material eingesetzt werden, sondern auch zum Be- und Entladen von Rohteilen.

Dabei ist besonders bevorzugt, dass im Boden der Ausnehmung ein Durchgang ausgebildet ist, durch den das Magnetelement bewegbar ist. In diesem Durchgang kann das Magnetelement in radialer Richtung geführt, also stabilisiert werden. Dabei ist die Form des Durchgangs insbesondere auf einen Querschnitt des Magnetelements abgestimmt, der insbesondere mehreckig ist, sodass das Magnetelement innerhalb des Durchgangs auch gegen ein Verdrehen gesichert ist. Dabei ist vorzugsweise vorgesehen, dass der Durchgang mittig innerhalb des Bodens angeordnet ist, sodass auch eine mittige Kraftwirkung auf das anzuheben Werkstück ausgeübt wird.

In einer bevorzugten Ausgestaltung ist der Boden der Ausnehmung durch eine Bodenplatte gebildet, die innerhalb der Ausnehmung angeordnet ist. Dies ermöglicht eine einfache Montage des Magnethebers, in dem beispielsweise von der unteren Stirnseite aus ein Raum für das Magnetelement vorgesehen ist, der durch die Bodenplatte bis auf den Durchgang wieder verschlossen wird. Das Magnetelement kann so unverlierbar innerhalb des Grundkörpers untergebracht werden. Die Bodenplatte ist dabei mit der Stirnseite des Grundkörpers fest verbunden, insbesondere verschraubt.

Durch einen einfachen Austausch der Werkstückplatte kann der Magnetheber so bei Werkstückenden unterschiedlicher Geometrie eingesetzt werden. Das Werkstückende wird dann nicht unbedingt bis in den Aufnahmeraum des Grundkörpers eingeführt, sondern gegebenenfalls nur innerhalb der Öffnung in der Werkstückplatte aufgenommen. Dabei hat sich herausgestellt, dass eine Aufnahmetiefe in axialer Richtung von 3-10 mm, insbesondere von 5 mm, ausreichend ist, um die zum Abtrennen des Werkstücks von der Stange erforderlichen Rotationskräfte zu übertragen.

Dabei ist besonders bevorzugt, dass in der Öffnung ein axialer Anschlag ausgebildet ist. Der Anschlag bildet dabei eine Anlagefläche für das Werkstück innerhalb der Öffnung und legt somit fest, wie weit das Werkstück in die Öffnung eingeführt werden kann. Das Werkstück erhält so innerhalb der Öffnung bzw. am Magnetheber eine definierte Position.

In einer bevorzugten Ausgestaltung ist das Magnetelement mit einem Schieber verbunden, der durch einen Fluiddruck in Richtung Hebeposition beaufschlagbar ist. Der Schieber ist dann zusammen mit dem Magnetelement innerhalb des Grundkörpers des Magnethebers axialbeweglich untergebracht. Ein unter Druck stehendes Fluid kann eine Flüssigkeit sein, wie beispielsweise Kühlflüssigkeit der Bearbeitungsmaschine. Diese kann dann auf den Schieber wirken und somit den Schieber zusammen mit dem Magnetelement von der Freigabeposition in die Hebeposition bewegen. Die Kühlflüssigkeit einer Bearbeitungsmaschine steht unter relativ hohem Druck von beispielsweise 30-40 bar und kann somit mit entsprechend hoher Kraft auf den Schieber mit dem Magnetelement wirken. Dementsprechend lässt sich damit problemlos eine Bewegung des Magnetelements hervorrufen.

Als Fluid kann aber auch komprimierte Luft dienen, die in der Regel ohnehin zur Verfügung steht. Damit ist der Magnetheber auch bei Bearbeitungsmaschinen ohne Flüssigkeitskühlung einsetzbar.

Der Schieber ist die mit dem Magnetelement relativ starr verbunden, insbesondere verschraubt. Zwischen Schieber und Magnetelement lassen sich somit Zug- und Druckkräfte übertragen. Dafür kann ein Gewindestift vorgesehen sein, der sowohl in den Schieber als auch in das Magnetelement geschraubt wird und so diese beiden Elemente fest miteinander verbindet.

Dabei ist besonders bevorzugt, dass der Schieber innerhalb des Grundkörpers an seiner Umfangsfläche axial beweglich geführt ist. Damit ergibt sich eine gute radiale Führung, ohne dass dafür zusätzliche Elemente erforderlich sind. Das Magnetelement braucht dadurch in der Regel keine zusätzliche Führung, sondern kann von einem Freiraum umgeben sein.

In einer bevorzugten Ausgestaltung ist im Befestigungsstift eine Druckleitung zur Beaufschlagung des Schiebers ausgebildet. Zusätzliche, beispielsweise außen an den Grundkörper herangeführte Druckleitungen sind damit nicht erforderlich. Ferner ist der Befestigungsstift in der Regel mittig an der oberen Stirnseite angeordnet, sodass auch der Schieber mit dem Magnetelement mittig mit Druck beaufschlagt werden. Es ergibt sich somit eine geradlinige Kraftwirkung.

Dabei ist besonders bevorzugt, dass in der Umfangsfläche des Schiebers ein Dichtelement angeordnet ist. Das unter Druck stehende und durch die Druckleitung zugeführte Fluid kann so direkt auf den Schieber wirken. Die Ausgestaltung eines zusätzlichen Druckraumes, einer Membran oder ähnlichen ist nicht erforderlich. Der Aufbau des Magnethebers wird vielmehr einfach gehalten.

Vorzugsweise ist das Magnetelement mit einer Federkraft in Richtung Freigabeposition beaufschlagt. Ein entsprechendes Federelement kann dabei direkt auf das Magnetelement wirken, oder aber auf den Schieber, was in der Regel einfacher zu realisieren ist. Insbesondere ist das Federelement dabei zwischen dem Schieber und der Bodenplatte eingespannt. Dabei kann das Federelement eine relativ hohe Kraft aufbringen, da das Fluid, insbesondere die Kühlflüssigkeit mit einem hohen Druck an der anderen Seite auf den Schieber wirken kann. Dementsprechend lässt sich das Magnetelement durch die Federkraft zuverlässig vom Werkstück entfernen, wodurch sich der Magnetheber vom Werkstück löst.

In einer bevorzugten Weiterentwicklung weist der Magnetheber am Befestigungsstift eine Dämpfungsvorrichtung auf, die in axialer Richtung um einen begrenzten Weg beweglich am Befestigungsstift angeordnet ist. Dabei ist die Dämpfungsvorrichtung gegen Rotation am Befestigungsstift gesichert. Der Bearbeitungskopf einer Bearbeitungsmaschine wird dann über die Dämpfungsvorrichtung mit dem Magnetheber verbunden, wobei die Dämpfungsvorrichtung ein Ausweichen des Magnethebers in Richtung Bearbeitungskopf erlaubt. Damit wird eine Beschädigung des Bearbeitungskopfes bzw. des Magnethebers vermieden, wenn dieser versehentlich beim Aufnehmen eines Werkstückendes zu weit abgesenkt wird.

Die Dämpfungsvorrichtung weist dabei vorzugsweise eine sogenannte Weldon-Aufnahme auf, mit der eine einfache Verbindung zum Bearbeitungskopf erfolgen kann.

Dabei ist bevorzugt, dass die Dämpfungsvorrichtung eine Hülse aufweist, in die der Befestigungsstift eingeführt ist, wobei zwischen dem Befestigungsstift und der Dämpfungsvorrichtung ein in Axialrichtung wirkendes Federelement eingespannt ist. Der Befestigungsstift ist dabei in Radialrichtung möglichst spielfrei in der Hülse aufgenommen und kann gegen die Kraft des Federelementes um einen gewissen Weg von beispielsweise 10 mm in die Hülse hineingedrückt werden.

Dabei ist besonders bevorzugt, dass zwischen der Hülse und dem Befestigungsstift eine Verdrehsicherung ausgebildet ist. Diese kann durch eine in Axialrichtung verlaufende Nut in Verbindung mit einem Gewindestift realisiert sein. Beispielsweise ist die Nut im Befestigungsstift ausgebildet, wobei der Gewindestift in eine in der Hülse eingebrachtes Gewindeloch eingeschraubt ist, bis er mit seinem Ende in die Nut eingreift. Bei einer axialen Bewegung des Magnethebers mit dem Befestigungsstift gegenüber der Dämpfungsvorrichtung verschiebt sich der Gewindestift dann in der Nut.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Magnetheber in räumlicher Darstellung,
- Fig. 2: eine Schnittansicht des Magnethebers nach Fig. 1 und
- Fig. 3: einen Magnetheber mit einer Dämpfungsvorrichtung.

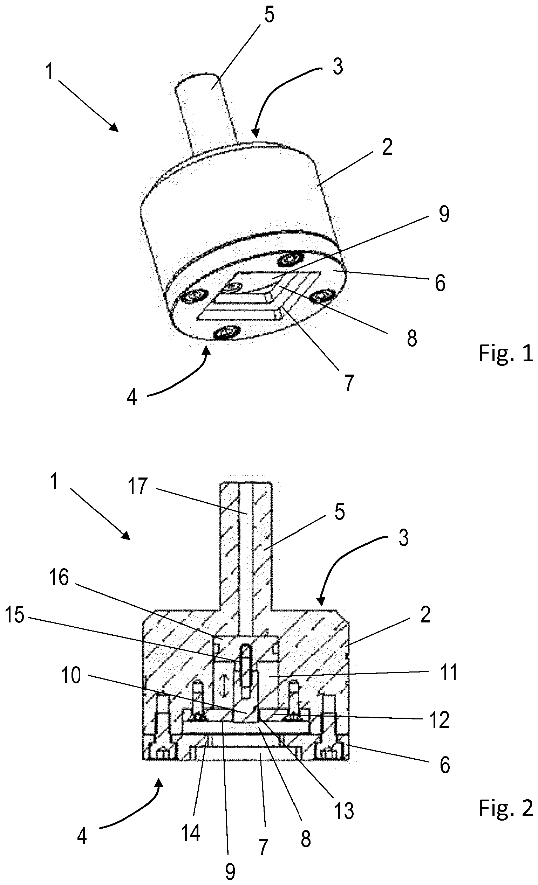

In Figur 1 ist ein Magnetheber 1 in räumlicher Darstellung gezeigt, der einen zylindrischen Grundkörper 2 aufweist, der mit einer oberen Stirnseite 3 und einer dazu parallelen unteren Stirnseite 4 versehen ist. Von der oberen Stirnseite 3 geht ein Befestigungsstift 5 aus, der in einem Bearbeitungskopf wie einem Fräskopf einer Bearbeitungsmaschine eingespannt werden kann. Der Befestigungsstift 5 ist dabei mittig auf der Stirnseite 3 positioniert und liegt auf einer Symmetrieachse des Magnethebers 1.

An der unteren Stirnseite 4 des Grundkörpers 2 ist eine Werkstückplatte 6 angeordnet, die den Grundkörper 2 sozusagen axial verlängert. Innerhalb der Werkstückplatte 6 ist mittig eine Öffnung 7 eingebracht, die zu einer Ausnehmung 8 führt, die in die untere Stirnseite 4 des Grundkörpers 2 eingeformt ist. Die Ausnehmung 8 wird in Richtung zum Grundkörper 2 durch einen Boden 9 begrenzt.

Ein Werkstückende eines Werkstücks kann in der Öffnung 7 derart formschlüssig aufgenommen werden, dass es drehfest mit dem Magnetheber 1 verbunden ist. Um das Werkstück nun in axialer Richtung mit dem Magnetheber 1 anheben zu können, ist innerhalb des Grundkörpers 2 ein axial bewegbares Magnetelement 10 angeordnet (Figur 2). Für das Magnetelement 10 ist dabei ein Raum 11 im Grundkörper ausgebildet, der durch eine Bodenplatte 12 begrenzt wird, die auch den Boden 9 der Ausnehmung 8 bildet. Das Magnetelement 10 ist dabei durch einen in der Bodenplatte 12 ausgebildeten Durchgang 13 axialbeweglich auf der Symmetrieachse des Grundkörpers in Verlängerung des Befestigungsstifts 5 senkrecht zur Bodenplatte 12 geführt.

In der Öffnung 7 der Werkstückplatte 6 ist ein axialer Anschlag 14 ausgebildet, der als Anlagefläche für eine Stirnseite des Werkstückendes dient.

Das Magnetelement 10 ist über einen Gewindestift 15 mit einem Schieber 16 fest verbunden, wobei zwischen dem Magnetelement 10 und dem Schieber 16 Druck- und Zugkräfte übertragbar sind. Im Raum 11 ist rund um das Magnetelement ausreichend Platz, um beispielsweise ein oder mehrere Federelemente aufzunehmen, die zwischen der Bodenplatte 12 und dem Schieber 16 eingespannt sind und den Schieber 16 in Richtung einer Freigabeposition drücke, in der er in Bezug zur Stirnseite 4 bzw. der Werkstückplatte 6 von der Hebeposition axial nach innen versetzt ist.

Auf der vom Magnetelement 10 abgewandten Seite des Schiebers 16 mündet eine Druckleitung 17, die durch den Befestigungsstift 5 verläuft. An diese Druckleitung 17 kann beispielsweise ein Kühlflüssigkeitskreislauf der Bearbeitungsmaschine angeschlossen werden, sodass die unter einem relativ hohen Druck von in der Regel zwischen 30-40 bar stehende Kühlflüssigkeit der Bearbeitungsmaschine auf den Schieber 16 wirken kann. Dieser Druck bewirkt eine Bewegung des Schiebers 16 mit dem Magnetelement 10 in axialer Richtung aus dem Grundkörper 2 heraus, sodass das Magnetelement 10 in die Nähe eines in der Öffnung 7 befindlichen Werkstückendes gebracht wird. Dieses wird dementsprechend vom Magnetelement angezogen. Aufgrund der magnetischen Wechselwirkung kann das Werkstückende dann mit dem Magnetheber 1 aufgenommen werden.

Mithilfe des erfindungsgemäßen Magnethebers kann also ein Abtrennen und Heben eines Werkstückendes erfolgen, das durch Bearbeitung von einem stangenförmig vorliegenden Material erzeugt worden ist und mit diesem noch durch einen schmalen Steg verbunden ist. Durch Drehen des Magnethebers und damit des Werkstückendes wird dieser Steg zerstört und das Werkstückende kann einfach entnommen werden. Mit dem Magnetheber kann das Werkstück dann an einen gewünschten Ort verbracht werden.

Die Bewegung des Magnetelements von einer Freigabeposition in die Position kann dann durch Beaufschlagung mit dem Druck der Kühlflüssigkeit der Bearbeitungsmaschine oder einem anderen Fluid, wie beispielsweise komprimierter Luft, erfolgen. Diese ist bei vielen Bearbeitungsmaschinen sowieso im Einsatz, sodass der Magnetheber ohne weitere Installationen eingesetzt werden kann. Das Lösen des Magnethebers vom Werkstückende erfolgt dann mittels Federkraft, also ohne zusätzliche Energiezufuhr einfach durch Deaktivieren der Druckbeaufschlagung. Ein sicheres Lösen ist somit gewährleistet.

Durch die austauschbar am Grundkörper befestigte Werkstückplatte kann der Magnetheber einfach an unterschiedliche Werkstückenden angepasst werden, indem einfach eine Werkstückplatte mit einer Öffnung in einer dem Werkstückende entsprechenden Form mit dem jeweiligen Grundkörper verbunden wird. Der Magnetheber ist damit vielseitig einsetzbar und einfach anpassbar.

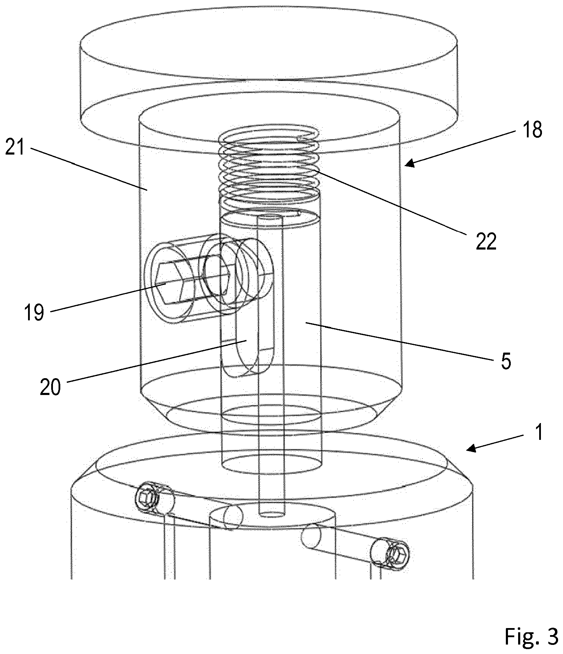

In Fig. 3 ist der Magnetheber mit einer am Befestigungsstift 5 angeordneten Dämpfungsvorrichtung 18 gezeigt. Die Dämpfungsvorrichtung 18 ist in axialer Richtung um einen begrenzten Weg gegenüber dem Befestigungsstift 5 bewegbar. Dabei weist die Dämpfungsvorrichtung 18 eine Hülse 21 auf, die mit einem Gewindestift 19 am Befestigungsstift 5 gegen Rotation gesichert, der in eine in Axialrichtung verlaufende Nut 20, die im Befestigungsstift 5 eingeformt ist, eingreift. Zur Anschlagdämpfung ist zwischen der Hülse 21 und dem Befestigungselement 5 ein Federelement 22 angeordnet.

Der Bearbeitungskopf einer Bearbeitungsmaschine wird dann über die Dämpfungsvorrichtung 18 mit dem Magnetheber 1 verbunden, wobei die Dämpfungsvorrichtung 18 ein Ausweichen des Magnethebers 1 in Axialrichtung relativ zum Bearbeitungskopf erlaubt. Damit wird eine Beschädigung des Bearbeitungskopfes bzw. des Magnethebers vermieden, wenn dieser versehentlich beim Aufnehmen eines Werkstückendes zu weit abgesenkt wird.

Die Erfindung ist nicht auf eine der vorbeschriebenen Ausführungsformen beschränkt, sondern in vielfältiger Weise abwandelbar.

Insbesondere kann von der kreiszylindrischen Form des Magnethebers abgewichen werden und dieser beispielsweise eine mehreckige Grundfläche aufweisen. Auch kann anstelle der Druckbeaufschlagung über die Kühlmittelflüssigkeit der Bearbeitungsmaschine eine anderweitige Druckbeaufschlagung vorgesehen werden, beispielsweise eine pneumatische Druckbeaufschlagung.

### Bezugszeichenliste

1 Magnetheber
2 Grundkörper
3 obere Stirnseite
4 untere Stirnseite
5 Befestigungsstift
6 Werkstückplatte
7 Öffnung
8 Ausnehmung
9 Boden
10 Magnetelement
11 Raum
12 Bodenplatte
13 Durchgang
14 Anschlag
15 Gewindestift
16 Schieber
17 Druckleitung
18 Dämpfungsvorrichtung
19 Gewindestift
20 Nut
21 Hülse
22 Federelement

## Patentansprüche

1. Magnetheber (1) für eine Bearbeitungsmaschine mit einem zylindrischen Grundkörper (2), der eine obere Stirnseite (3) mit einem Befestigungsstift (5) für einen Bearbeitungskopf und eine untere Stirnseite (4) mit einer Ausnehmung (8) aufweist, wobei innerhalb des Grundkörpers (2) ein Magnetelement (10) axialbeweglich zwischen einer Hebeposition und einer Freigabeposition bewegbar ist, wobei das Magnetelement (10) in der Freigabeposition axial weiter innen relativ zum Grundkörper positioniert ist als in der Halteposition, **dadurch gekennzeichnet, dass** an der unteren Stirnseite (4) des Grundkörpers (2) eine Werkstückplatte (6) angeordnet ist, die eine Öffnung (7) für das Werkstückende aufweist, wobei das Werkstückende rotationsfest in der Öffnung (7) aufnehmbar ist..

2. Magnetheber nach Anspruch 1, **dadurch gekennzeichnet, dass** im Boden (9) der Ausnehmung (8) ein Durchgang (13) ausgebildet ist, durch den das Magnetelement (10) bewegbar ist.

3. Magnetheber nach Anspruch 1 oder 2, **dadurch gekennzeichnet, dass** der Boden (9) durch eine Bodenplatte (12) gebildet ist, die innerhalb der Ausnehmung (8) angeordnet ist.

4. Magnetheber nach einem der vorhergehenden Ansprüche, **dadurch gekennzeichnet, dass** in der Öffnung (7) ein axialer Anschlag (14) ausgebildet ist.

5. Magnetheber nach einem der vorhergehenden Ansprüche, **dadurch gekennzeichnet, dass** das Magnetelement (10) mit einem Schieber (16) verbunden ist, der durch einen Fluiddruck in Richtung Hebeposition beaufschlagbar ist.

6. Magnetheber nach Anspruch 5, **dadurch gekennzeichnet, dass** der Schieber (16) innerhalb des Grundkörpers (2) an seiner Umfangsfläche axial beweglich geführt ist.

7. Magnetheber nach Anspruch 5 oder 6, **dadurch gekennzeichnet, dass** im Befestigungsstift (5) eine Druckleitung zur Beaufschlagung des Schiebers (16) ausgebildet ist.

8. Magnetheber nach einem der Ansprüche 5 bis 7, **dadurch gekennzeichnet, dass** in der Umfangsfläche des Schiebers (16) ein Dichtelement angeordnet ist.

9. Magnetheber nach einem der vorhergehenden Ansprüche, **dadurch gekennzeichnet, dass** das Magnetelement (10) mit einer Federkraft in Richtung Freigabeposition beaufschlagt ist.

10. Magnetheber nach einem der vorhergehenden Ansprüche, **dadurch gekennzeichnet, dass** am Befestigungsstift (5) eine Dämpfungsvorrichtung (18) befestigt ist, die in axialer Richtung um einen begrenzten Weg beweglich am Befestigungsstift (5) angeordnet ist.

## Claims

1. Magnetic lifter (1) for a processing machine with a cylindrical base body (2), which has an upper end face (3) with a fastening pin (5) for a processing head and a lower end face (4) with a recess (8), wherein a magnetic element (10) is axially movable within the base body (2) between a lifting position and a release position, the magnetic element (10) being positioned axially further inwards relative to the base body in the release position than in the holding position, **characterized in that** a workpiece plate (6) is arranged on the lower end face (4) of the base body (2), the workpiece plate (6) having an opening (7) for the workpiece end, wherein the workpiece end is receivable in the opening (7) in a rotationally fixed manner.

2. Magnetic lifter according to claim 1, **characterized in that** a passage (13) is formed in the bottom (9) of the recess (8), the magnetic element (10) being movable through the passage.

3. Magnetic lifter according to claim 1 or 2, **characterized in that** the bottom (9) is formed by a bottom plate (12) which is arranged inside the recess (8).

4. Magnetic lifter according to one of the preceding claims, **characterized in that** an axial stop (14) is formed in the opening (7).

5. Magnetic lifter according to one of the preceding claims, **characterized in that** the magnetic element (10) is connected to a slide (16) which is impactable upon by a fluid pressure in the direction of the lifting position.

6. Magnetic lifter according to claim 5, **characterized in that** the slide (16) is axially movably guided within the base body (2) on the circumferential surface of the slide.

7. Magnetic lifter according to claim 5 or 6, **characterized in that** a pressure line for acting on the slide (16) is formed in the fastening pin (5).

8. Magnetic lifter according to one of the claims 5 to 7, **characterized in that** a sealing element is arranged in the circumferential surface of the slide (16).

9. Magnetic lifter according to one of the preceding claims, **characterized in that** a spring force acts upon the magnetic element (10) in the direction of the release position.

10. Magnetic lifter according to one of the preceding claims, **characterized in that** a damping device (18) is fastened to the fastening pin (5), the damping device being arranged on the fastening pin (5) such that the damping device is movable in the axial direction along a limited distance.

## Revendications

1. Elévateur magnétique (1) pour une machine d'usinage avec un corps de base cylindrique (2), qui présente une face frontale supérieure (3) avec une tige de fixation (5) pour une tête d'usinage et une face frontale inférieure (4) avec un évidement (8), un élément magnétique (10) étant mobile axialement à l'intérieur du corps de base (2) entre une position de levage et une position de libération, l'élément magnétique (10) étant positionné axialement plus à l'intérieur par rapport au corps de base dans la position de libération que dans la position de maintien, **caractérisé en ce que** sur la face frontale inférieure (4) du corps de base (2) est disposée une plaque porte-pièce (6) qui présente une ouverture (7) pour l'extrémité de la pièce, l'extrémité de la pièce pouvant être reçue dans l'ouverture (7) sans pouvoir tourner.

2. Elévateur magnétique selon la revendication 1, **caractérisé en ce qu'**un passage (13) est formé dans le fond (9) de l'évidement (8), dans lequel l'élément magnétique (10) peut être déplacé à travers le passage.

3. Elévateur magnétique selon la revendication 1 ou 2, **caractérisé en ce que** le fond (9) est formé par une plaque de fond (12) qui est disposée à l'intérieur de l'évidement (8).

4. Elévateur magnétique selon l'une des revendications précédentes, **caractérisé en ce qu'**une butée axiale (14) est formée dans l'ouverture (7).

5. Elévateur magnétique selon l'une des revendications précédentes, **caractérisé en ce que** l'élément magnétique (10) est relié à un tiroir (16) qui peut être sollicité par une pression de fluide en direction de la position de levage.

6. Elévateur magnétique selon la revendication 5, **caractérisé en ce que** le tiroir (16) est guidé de manière mobile axialement sur sa surface périphérique à l'intérieur du corps de base (2).

7. Elévateur magnétique selon la revendication 5 ou 6, **caractérisé en ce qu'**une conduite de pression est formée dans la tige de fixation (5) pour alimenter le tiroir (16).

8. Elévateur magnétique selon l'une des revendications 5 à 7, **caractérisé en ce qu'**un élément d'étanchéité est disposé dans la surface périphérique du coulisseau (16).

9. Elévateur magnétique selon l'une des revendications précédentes, **caractérisé en ce que** l'élément magnétique (10) est soumis à une force élastique en direction de la position de libération.

10. Elévateur magnétique selon l'une des revendications précédentes, **caractérisé en ce qu'**un dispositif d'amortissement (18) est fixé à la tige de fixation (5), lequel est disposé sur la tige de fixation (5) de manière à pouvoir se déplacer dans le sens axial sur une distance limitée.
